# EUROPÄISCHE PATENTSCHRIFT

(11) **EP 2 737 122 B1**
(45) Veröffentlichungstag und Bekanntmachung des Hinweises auf die Patenterteilung: **03.02.2016**
(21) Anmeldenummer: 12758992.7
(22) Anmeldetag: 18.07.2012
(51) Int. Cl.: D21B 1/34, D21B 1/32

(54) **PULPER MIT EINER WELLE**
PULPER HAVING A SHAFT
TRITURATEUR DOTE D'UN ARBRE

(30) Priorität: 26.07.2011 DE 102011108453; 22.08.2011 DE 102011110787; 22.09.2011 DE 102011113856; 07.03.2012 DE 102012004344; 15.06.2012 DE 102012011776
(43) Veröffentlichungstag der Anmeldung: 04.06.2014
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus
(86) Internationale Anmeldenummer: PCT/DE2012/000729
(87) Internationale Veröffentlichungsnummer: WO 2013/013655

(56) Entgegenhaltungen:
- EP-A2- 0 126 632
- FR-A1- 2 908 058
- US-A- 3 035 781
- US-A- 4 604 193

## Beschreibung

Die Erfindung betrifft einen Pulper mit einer Welle, auf der eine Spirale angeordnet ist, und ein Verfahren zur Behandlung von Verbundmaterialien.

Pulper mit einer Welle, auf der eine Spirale angeordnet ist, sind in unterschiedlichsten Ausführungsformen bekannt. Hierbei dient die Spirale der Umwälzung der im Pulper zu behandelnden Materialien wie insbesondere von biologischen Materialien oder Papierreststoffen. Im Pulper werden diese Materialien durch intensives Mahlen und Vermischen zerstört und vorzugsweise bis zu Fasern zerkleinert.

Beispielsweise zeigt die FR 2 908 058 A1 einen Pulper mit einer Welle, auf der eine Spirale angeordnet ist, wobei die Spirale und eine gegenläufige Spirale auf der gleichen Welle angeordnet sind.

Unterschiedlichste Ausführungsformen von Spiralen und Pulpern dienen dazu, eine optimale Vermengung und eine gute Friktion zu erzielen.

Der Erfindung liegt die Aufgabe zu Grunde, einen derartigen Pulper weiterzuentwickeln und eine hoch effiziente Suspendierung zu erreichen und gleichzeitig die Stoffflüsse zu optimieren.

Diese Aufgabe wird nach einem ersten Aspekt der Erfindung mit einem gattungsgemäßen Pulper gelöst, der eine Welle mit einer gegenläufigen Spirale aufweist, wobei die Spiralen von einem Siebkorb umgeben sind.

Ein derartiger Doppelpulper mit zwei gegenläufig arbeitenden Spiralen führt zu einer hoch effizienten Suspendierung und vorzugsweise vollständigen Entstippung. Dies ermöglicht eine Sortierung, eine Befreiung von Begleitstoffen und vor allem bei Verwendung von Mahlkörpern eine fibrillierende Mahlung.

Die Kapazität des Pulpers wird durch die Verwendung dieser zweiten gegenläufigen Spirale vorzugsweise in Verbindung mit einer Zuführschraube im oberen Reaktionsraum verdoppelt bis verdreifacht. Dies liegt daran, dass die Gegenläufigkeit der Spiralen einen störenden Tangentialfluss des Stoffes vermeidet und dadurch die Friktion erhöht wird.

Ein Schlitzkorb im mittleren Bereich des Pulpers begünstigt die Stoffflüsse. Hierbei können Standardkörbe aus dem Bereich der heute üblicherweise am Markt angebotenen Drucksortierer verwendet werden.

Nach dem ersten Aspekt der Erfindung sind die beiden Spiralen auf der gleichen Welle angeordnet. Je nach Ausführungsart der Spiralen, nach Drehung der Wendel und nach Richtung des Antriebs der Spiralen entstehen unterschiedliche Strömungen im Reaktionsraum des Pulpers. Hierbei sind Ausführungsformen bevorzugt, bei denen im mittleren Bereich des Reaktionsraumes zwei Strömungen aufeinander treffen, die eine hohe Friktion des Materials in diesem Bereich bewirken.

Vorteilhaft ist es, wenn radial von diesem Bereich ein Auslass vorgesehen ist, der als Siebkorb ausgebildet sein kann.

Ein derartiger Pulper kann in herkömmlicher Art und Weise im unteren Bereich ein Siebblech aufweisen. Bei dem erfindungsgemäßen Pulper sind die Spiralen jedoch von einem Siebkorb umgeben.

Insbesondere bei Verwendung einer Zuführöffnung mit verringertem Durchmesser wird vorgeschlagen, dass der Pulper eine Zuführschraube im oberen Bereich des Pulpers aufweist.

Die Stoffflüsse werden dadurch optimiert, dass der Pulper radial außerhalb des Bereiches zwischen Spirale und gegenläufiger Spirale einen Schlitzkorb aufweist.

Als Korb kann vorzugsweise ein bekannter Korb eines Drucksortierers verwendet werden.

Ein derartiger Korb ist vorzugsweise mit unterschiedlichen Öffnungen um die Spiralen angeordnet.

Vorteilhaft ist es, wenn der Pulper einen zylindrischen Korb aufweist.

Ähnliche verfahrenstechnische Ergebnisse wie bei einem Rohrreaktor werden erzielt, wenn der Pulper mehrere nacheinander angeordnete Einheiten aufweist, die jeweils mindestens eine Spirale und einen Siebkorb aufweisen.

Hierbei ist es vorteilhaft, wenn die Einheiten mittels eines Durchgangs mit Förderspirale miteinander verbunden sind.

Um zwischen den Einheiten Verdünnungswasser zuführen zu können, wird vorgeschlagen, dass im Bereich des Durchgangs ein Zulauf angeordnet ist.

Die Verwendung mehrerer Einheiten ermöglicht es, einen Pulper so zu bauen, dass nacheinander angeordnete Einheiten unterschiedliche Körbe aufweisen.

Hier bei können nacheinander angeordnete Einheiten Körbe mit zylindrischen Lochbereichen aufweisen, wobei die axiale Länge der Körbe variiert. Alternativ oder kumulativ kann auch der Radius der Körbe variieren.

Eine fibrillierende Mahlung wird dadurch erzielt, dass der Pulper einen Korb mit Mahlkörpern aufweist.

Als Mahlkörper werden Kugeln und unregelmäßig geformte Mahlkörper vorgeschlagen. Je nach Anwendung werden unterschiedliche Materialien als Mahlkörper verwendet. Beispielsweise für die Behandlung von Verbundmaterialien hat sich überraschender Weise herausgestellt, dass Sand als Mahlkörper zu besonders guten Ergebnissen führt. Daher wird vorgeschlagen, dass der Pulper einen Korb mit Sand als Mahlkörper aufweist. Der Sand kann ein herkömmlicher Sand sein, der durch die wiederholte Verwendung im Pulper gereinigt wird. Es kann aber auch ein Quarzsand mit einer speziellen Körnung Verwendung finden, die auf das zu behandelnde Material abgestimmt ist.

Die Merkmale zum Korb und den Mahlkörpern sind auch unabhängig von der Ausbildung der Spiralen erfindungswesentlich.

Der Erfindung liegt weiterhin die Aufgabe zu Grunde, ein Verfahren zur Behandlung von Verbundmaterialien vorzustellen, mit dem die Verbundmaterialien auf einfache Art und Weise wieder in verwertbare Reststoffe zerlegt werden können.

Diese Aufgabe wird mit einem Verfahren zur Behandlung von Verbundmaterialien gelöst, bei dem die Verbundmaterialien in einen Pulper mit Mahlkörpern gegeben werden und dort Rejekte und Faserstoffe getrennt werden. Als Pulper kann beispielsweise ein Pulper verwendet werden, wie er zuvor beschrieben worden ist.

Es hat sich herausgestellt, dass Verbundmaterialien wie Tetra Pak-Verpackungen in einem herkömmlichen Pulper behandelt werden können, um den Faserstoff abzutrennen. Dieses Verfahren wird dadurch erleichtert, dass in den Pulper Mahlkörper gegeben werden. Als Mahlkörper eignen sich Kugeln in unterschiedlichen Größen und mit unterschiedlicher Geometrie und Oberfläche. Besonders vorteilhaft hat sich ein Verfahren herausgestellt, bei dem als Mahlkörper Sand verwendet wird.

Für das Verfahren kann auch ein herkömmlicher Pulper ohne Siebblech verwendet werden, um die Verbundmaterialien unter Zugabe von Sand als Mahlkörper intensiv zu behandeln. Im Pulper oder anschließend können die Faserstoffe abgetrennt werden.

Nach Abtrennung der Faserstoffe werden die Rejekte in eine kunststoffhaltige und eine metallhaltige Fraktion getrennt. Dabei kann der Sand mit der metallhaltigen Fraktion abgetrennt werden. Als Trennungsmechanismen können Windsichter oder Schmelzverfahren Verwendung finden, um die Fraktionen voneinander zu trennen.

Beispielsweise bei einer Tetra Pak-Verbundverpackung können zunächst im Pulper die Faserstoffe entfernt werden. Anschließend werden die Rejekte in eine kunststoffhaltige Fraktion mit insbesondere Polyolefinen und/oder Polyethylen und in eine metallhaltige Fraktion mit insbesondere Aluminium getrennt. Der Sand und das Aluminium können über eine Windsichtung oder eine Schmelze oder über Siebverfahren voneinander getrennt werden.

Dieses Verfahren ermöglicht eine Wiederverwendung der Materialien, die bei einem Verbrennen oder einer Pyrolyse von Verbundmaterialien nicht möglich ist.

Mehrere bevorzugte Ausführungsbeispiele sind in der Zeichnung dargestellt und werden im Folgenden näher erläutert. Es zeigt die
- Figur 1: einen Querschnitt durch einen Pulper,
- Figur 2: einen Querschnitt durch einen Pulper mit einer auf einer weiteren Welle angeordneten gegenläufigen Spirale,
- Figur 3: einen Pulper mit mehreren nacheinander angeordneten Einheiten,
- Figur 4: einen Pulper mit mehreren Einheiten und zwischen den Einheiten vorgesehenen Wasserzuläufen und
- Figur 5: einen Schwerteilefang mit radialer Stoffzufuhr und zentraler Stoffabfuhr.

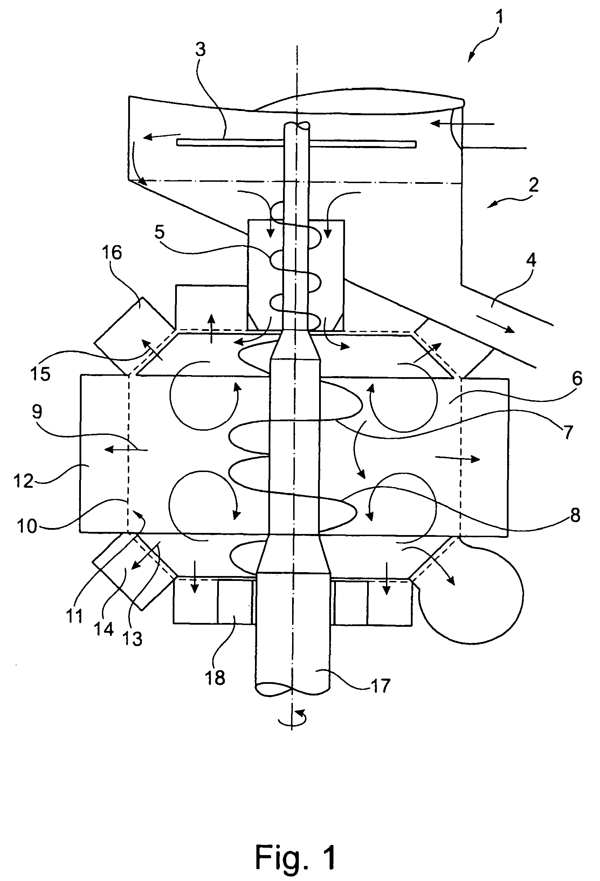

Der in der Figur 1 gezeigte Pulper 1 hat im oberen Bereich einen Schwerteilefang 2, um mit einem Schläger 3 Schwerteile radial nach außen und in den Schwerteileausgang 4 zu fördern, während die leichteren Teile im radial inneren Bereich zur Zuführspirale 5 gelangen.

Die Zuführspirale fördert das Mahlgut in den Reaktionsraum 6, in dem eine erste Spirale 7 das Mahlgut in der Mitte des Reaktionsraumes nach oben fördert, so dass es am Rande des Reaktionsraumes nach unten gedrückt wird. Danach gelangt das Reaktionsgut weiter unten in den Eingriff der gegenläufigen zweiten Spirale 8, die das Mahlgut in der Mitte des Reaktionsraumes nach unten und damit im radial äußeren unteren Bereich des Reaktionsraumes nach oben fördert. Somit entsteht im mittleren Bereich des Reaktionsraumes 6 eine erhöhte Friktion zwischen dem Mahlgut.

Das Mahlgut gelangt dann im äußeren Bereich des Reaktionsraumes 6 in den Bereich des Siebblechkorbes 11. Dieser Siebkorb 11 weist unterschiedliche Schlitzgrößen auf, um das Mahlgut zu sortieren. Das Mahlgut gelangt daher durch unterschiedliche Bereiche 10, des Siebkorbes mit unterschiedlichen Schlitz oder Lochgrößen in unterschiedliche Kammern 12, durch die es den Pulper 1 verlässt.

Im mittleren Bereich des Reaktionsraumes 6 gelangt das Mahlgut 9 durch den mittleren Bereich 10 des Korbes 11 in die Kammer 12, über die es aus dem System entnommen wird. Im unteren Bereich gelangt Mahlgut 13 in die Kammer 14 und im oberen Bereich gelangt Mahlgut 15 in die Kammer 16.

Entsprechend sind um den Reaktionsraum 6 herum eine Vielzahl an Kammern angeordnet, die es ermöglichen, durch unterschiedliche Schlitz- oder Lochöffnungen im Siebkorb 11 unterschiedliche Sortierungen aus dem Reaktionsraum 6 zu entnehmen.

Ein Antrieb (nicht gezeigt) unterhalb des Pulpers ermöglicht es, die Welle 17, die durch die Dichtungspackung 18 in den Reaktionsraum eingeführt ist, zu drehen. Dadurch fördern die gegenläufigen Spiralen 7, 8 das Mahlgut in den mittleren Bereich des Pulpers.

Die Spiralen sind als gegenläufige Spiralen ausgebildet und vorzugsweise auf der gleichen Welle angeordnet. Dabei können die Spiralen so ausgebildet sein, dass sie das Material im Bereich der Welle aufeinander zu fördern oder in der entgegen gesetzten Richtung fördern. Beides führt dazu, dass das Material im mittleren Bereich des Reaktionsraumes 6 aufeinander trifft und durch die dabei entstehende Friktion vermahlen wird.

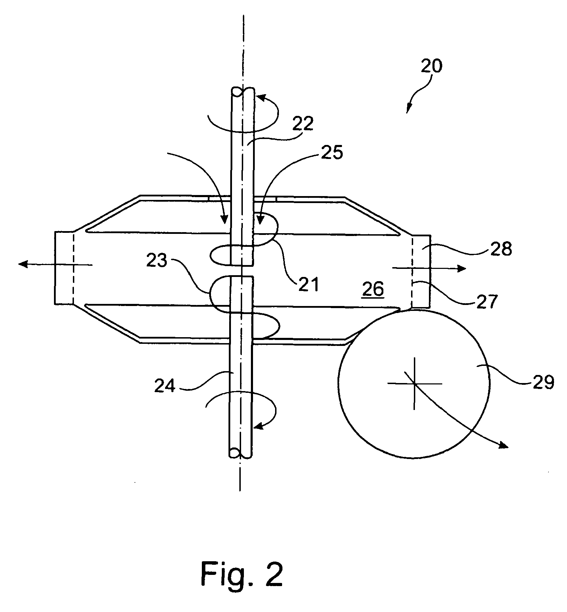

Der in Figur 2 gezeigte Pulper 20 hat eine erste Spirale 21 auf einer Welle 22 und eine zweite Spirale 23 auf einer Welle 24. Die Wellen 22, 24 sind voneinander getrennt, so dass sie in unterschiedlichen Richtungen antreibbar sind.

Das Mahlgut 25 gelangt zentral mit der Spirale 21 gefördert in den Reaktionsraum 26 des Pulpers 20. In diesem Reaktionsraum entsteht eine Strömung, die eine Friktion zwischen dem strömenden Mahlgut hervorruft. Nach dieser Behandlung gelangt das Mahlgut als Faserstoff durch ein zylindrisches Siebblech 27 in einen Ausgang 28, während der Reststoff durch einen Ausgang 29 den Pulper verlässt.

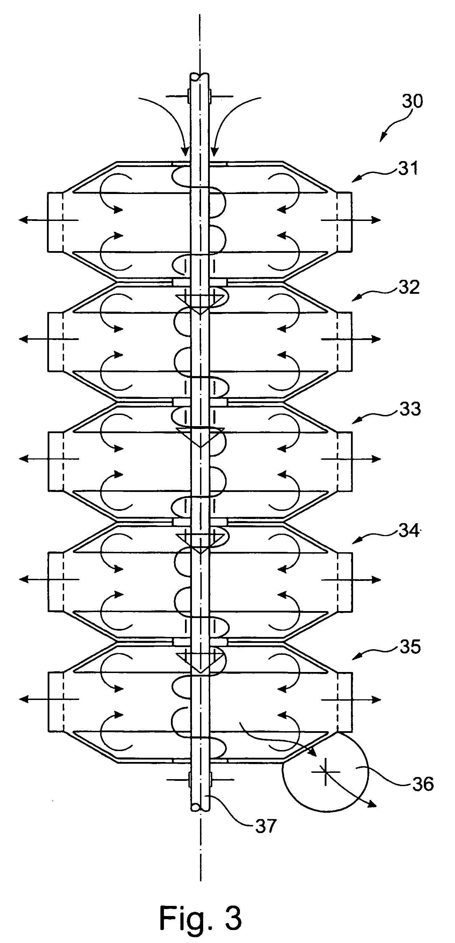

Mehrere der in Figur 2 gezeigten Pulper können als Einheiten mit voneinander separierten Reaktionsräumen hintereinander geschaltet werden. Hierdurch entsteht ein Rohrpulper 30, wie er in Figur 3 schematisch dargestellt ist.

Bei einem derartigen Rohrpulper 30 misst man über den Verlauf des Rohres, das heißt der einzelnen Einheiten 31 bis 35, unterschiedliche Zusammensetzungen des Stoffes bis hin zum Ausgang 36 des Rohrpulpers 30.

Ein guter Trennprozess wird entweder dadurch erreicht, dass vom Mahlgut ein einstufiger Reaktor mehrmals durchfahren wird. Hierzu dient ein Chargenbetrieb mit externem Kreislauf. Alternativ hierzu wird eine mehrstufige Schaltung vorgeschlagen, für die beispielsweise ein Reaktor 30 verwendet werden kann, wie er in Figur 3 gezeigt ist.

Der in Figur 3 gezeigte fünfstufige Doppelpulper mit einer Welle 37 ermöglicht eine kleine Bauweise und eine kontinuierliche Behandlung des Mahlgutes.

Höchste Ansprüche an das Mahlgut können gewährleistet werden, wenn ein Rohrpulper 30 mit mehreren Einheiten im Chargenbetrieb verwendet wird.

Der in Figur 3 abgebildete Pulper kann senkrecht wie die anderen gezeigten Pulper aufgestellt werden. Dazu sollte der Ausgang 36 verschließbar sein, um ein Auslaufen des Pulpers zu vermeiden. Alternativ oder kumulativ kann der Ausgang auch als Rohr bis zum obersten Niveau des Pulpers gezogen werden, so dass die Öffnung des Ausganges etwa im Niveau des Pulpereinganges liegt. Dadurch wird vermieden, dass am Ausgang ein zu großer Sog entsteht, der die Flüssigkeit aus dem Pulper zieht.

Eine vorteilhafte Ausführungsform sieht vor, dass der Pulper waagerecht aufgestellt wird, so dass die Einheiten 31 bis 35 nebeneinander und nicht übereinander liegen. Der Pulper kommt dann mit einer relativ geringen Raumhöhe aus.

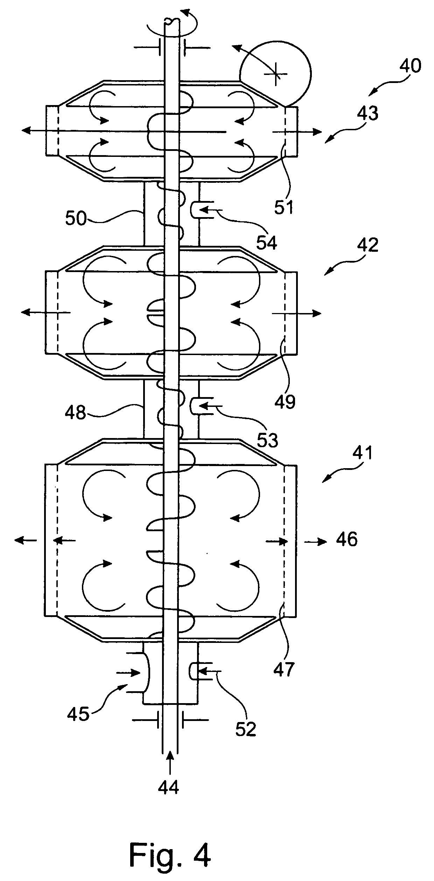

Der in Figur 4 gezeigte Pulper 40 weist drei Einheiten 41, 42, 43 auf, die hintereinander geschaltet auf einer Welle 44 angeordnet sind. Das Mahlgut gelangt am Eingang 45 in den Pulper und von dort in die erste Einheit 41. Während der Behandlung des Mahlgutes in der Einheit 41 gelangt Faserstoff 46 durch einen zylindrischen Siebkorb 47. Aus der ersten Einheit 41 wird das zu behandelnde Mahlgut über einen Durchgang 48 in die zweite Einheit 42 gefördert. Dort wird der Stoff weiter behandelt und Faserstoff wird über einen zylindrischen Siebkorb 49 abgeführt. Letztlich gelangt der Reststoff über einen Durchgang 50 in eine dritte Einheit 43 mit einem weiteren Siebkorb 51. Hierbei nimmt die axiale Erstreckung der hintereinander angeordneten Siebkörbe 47, 49, 51 immer weiter ab.

Der Pulper 40 hat drei Wasserzuläufe 52, 53, 54, von denen der erste Wasserzulauf 52 dem zu behandelnden Stoff 45 gegenüber angeordnet ist, während die weiteren Wasserzuläufe 53, 54 zwischen den Einheiten 41, 42 bzw. 42, 43 angeordnet sind. Dadurch wird erreicht, dass die Gesamtstoffdichte in jedem Pulper maximiert werden kann, indem möglichst wenig Wasser zugeführt wird. Trotzdem kann mehr Wasser zugeführt werden als dies möglich wäre, wenn nur am Eingang ein Wasserzufluss 52 vorgesehen wäre.

Durch die Verfahrensführung kann dafür gesorgt werden, dass die Friktionskräfte von Einheit zu Einheit zunehmen. Dies kann durch eine stärkere Umwälzung erreicht werden. Dadurch können auch Stoffe mit extrem hohen spezifischen Zerfaserungswiderständen mühelos suspendiert werden. Die größeren freien Siebflächen in den ersten zwei Einheiten 41, 42 ermöglichen es, auch Fasern aus leicht zerfaserbaren Altpapieren und bereits vorhandene Freifasern problemlos abzuführen.

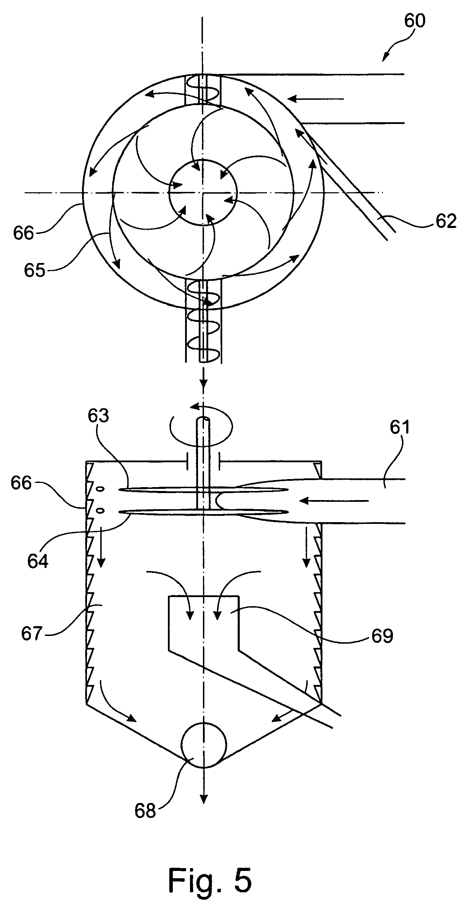

Die Figur 5 zeigt einen Schwerteilefang 60 in der Draufsicht und als Seitenansicht. Ein derartiger Schwerteilefang kann einem Pulper vorgeschaltet werden, um ggf. auch ohne Aufschlusswirkung zu mischen, zu vereinzeln, herauszulösen und Schwerteile abzuscheiden. Der Stoff wird bei Bedarf geschreddert und gelangt am Eingang 61 in den Schwerteilefang 60. Dort wird er von einem als Treibstrahl 62 wirkenden Wasserstrahl erfasst, so dass die Partikel des Stoffes vereinzelt werden. Dabei wird das Wasser des Wasserstrahls als Verdünnungswasser mit den Partikeln innig vermischt. Rotierende Scheiben 63 und 64 schleudern die schwereren Teile entlang der Pfeile 65 durch ballistische Effekte gegen eine Wand 66 des Schwerteilefangs 60. Dort geraten sie in eine strömungsfreie oder strömungsarme Zone 67, in der sie absinken. Die schwereren Teile gelangen somit zum unteren Ausgang 68. während die leichteren Teile zum zentralen Ausgang 69 gelangen. Im Unterschied zu einem Hydrozyklon soll hier weniger die Zentrifugalkraft durch Strömung als vielmehr das tangential Schleudern zum gewünschten Effekt der Trennung führen. Daher reichen auch kleinere Gerätedurchmesser aus.

In einem derartigen Pulper wird der Aufbereitungsschritt des Deinkens (Entfernung der Druckerschwärze) in starkem Maße unterstützt. Hierbei wird im ersten Durchlauf die Druckerschwärze vom Papier gelöst (ggf. unter Einsatz der üblichen Chemie) und mit wenig Wasser ausgewaschen. Wenig Wasser wird verwendet, um die Faserverluste gering zu halten. Dadurch werden höhere Weißgrade als mit der bekannten Behandlung erzielt. Dies deshalb, weil die verbleibende Schwarzpartikelgrößenverteilung nach oben hin verschoben wird und dadurch zu einer geringeren Grautönung führt - bedingt durch die geringere spezifische Oberfläche. Dies resultiert letztlich aus der deutlich geringeren Aufenthaltszeit in der Scherzone (Kappaeffekt).

Der Aufbereiter kann folgende Aufbereitungsschritte in einem einzigen Aggregat vereinen:
1.) Den Aufschluss (Trennung der Verbunde) - also einer Pulperfunktion
2.) Die Entstippung (Zerfaserung aller Schnipsel bzw. Stippen)
3.) Die Sortierung (Anreicherung der Begleitstoffe/Kunststoffe im Oberkorn, Anreicherung von Freifaserstoff im Unterkorn - und zwar nahezu 100 %). Dies entspricht also der Funktion eines sog. Entstufensortierers der üblichen Stoffaufbereitung im Anschluss bzw. als Abschluss einer mehrstufigen Sortierkaskade.
4.) Die Mahlung - bei Vorhandensein von Mahlkörpern (Kunststoffkugeln). Dies ist auch ein besonderer Vorteil für den Einsatz von Altpapier, da Kugeln in der Lage sind, die Schlitze in ausreichender Form freizuhalten. Bei ausreichender freier Schlitzfläche sind die Kugeln hilfreich aber nicht notwendig.
5.) Evtl. sogar die Dispergierung - in Verbindung mit hohen Temperaturen. Durch die hohen Temperaturen - knapp 100 °C bei Normaldruck, bei Druck entsprechend höher - würde die Mahlung behindert (exoterme Reaktion), die Zerkleinerung der Schmutzpunkte (Ziel der Dispergierung) jedoch gefördert.

## Patentansprüche

1. Pulper (1) mit einer Welle (17, 22), auf der eine Spirale (7, 21) angeordnet ist, wobei er eine weitere Welle (24) mit einer gegenläufigen Spirale (23) aufweist oder die Spirale (7) und eine gegenläufige Spirale (8)auf der gleichen Welle (17) angeordnet sind, wobei jeweils die Spiralen (7, 21, 23) von einem Siebkorb (11)umgeben sind.

2. Pulper nach Anspruch 1, **dadurch *gekennzeichnet, dass*** er eine Zuführschraube (5) im oberen Bereich des Pulpers (1) aufweist.

3. Pulper nach einem der vorhergehenden Ansprüche, ***dadurch gekennzeichnet, dass*** er radial außerhalb des Bereiches zwischen Spirale (7) und gegenläufiger Spirale (8) einen Schlitzkorb (11)aufweist.

4. Pulper nach einem der vorhergehenden Ansprüche, ***dadurch gekennzeichnet, dass*** er einen Korb (11) eines Drucksortierers aufweist.

5. Pulper nach einem der vorhergehenden Ansprüche, ***dadurch gekennzeichnet, dass*** er einen Korb (11) aufweist, der mit unterschiedlichen Öffnungen um die Spiralen (7, 8) angeordnet ist.

6. Pulper nach einem der vorhergehenden Ansprüche, ***dadurch gekennzeichnet, dass*** er einen zylindrischen Korb (11) aufweist.

7. Pulper nach einem der vorhergehenden Ansprüche, ***dadurch gekennzeichnet, dass*** er mehrere nacheinander angeordnete Einheiten (31 bis 35) aufweist, die jeweils mindestens eine Spirale (7, 8) und einen Siebkorb (11) aufweisen.

8. Pulper nach Anspruch 7, ***dadurch gekennzeichnet, dass*** die Einheiten (31 bis 35) mittels eines Durchgangs mit Förderspirale miteinander verbunden sind.

9. Pulper nach Anspruch 8, ***dadurch gekennzeichnet, dass*** im Bereich des Durchgangs ein Zulauf (52) angeordnet ist.

10. Pulper nach einem der vorhergehenden Ansprüche, ***dadurch gekennzeichnet, dass*** nacheinander angeordnete Einheiten (31 bis 35) unterschiedliche Körbe (11) aufweisen.

11. Pulper nach einem der vorhergehenden Ansprüche, ***dadurch gekennzeichnet, dass*** die nacheinander angeordnete Einheiten (31 bis 35) Körbe mit zylindrischen Lochbereichen aufweisen, wobei die axiale Länge der Körbe variiert.

12. Pulper nach einem der vorhergehenden Ansprüche, ***dadurch gekennzeichnet, dass*** die nacheinander angeordnete Einheiten (31 bis 35) Körbe mit zylindrischen Lochbereichen aufweisen, wobei der Radius der Körbe (11) variiert.

13. Pulper nach einem der vorhergehenden Ansprüche, ***dadurch gekennzeichnet, dass*** er einen Korb (11) mit Mahlkörpern aufweist.

14. Pulper nach einem der vorhergehenden Ansprüche, ***dadurch gekennzeichnet, dass*** er einen Korb (11) mit Sand als Mahlkörper aufweist.

15. Verwendung eines Pulpers nach einem der Ansprüche 1 bis 14 zum Behandlung von Verbundmaterialien, bei dem die Verbundmaterialien in den Pulper mit Mahlkörpern gegeben werden und dort Rejekte und Faserstoffe getrennt werden.

16. Verwendung nach Anspruch 15, ***dadurch gekennzeichnet, dass*** als Mahlkörper Sand verwendet wird.

17. Verwendung nach Anspruch 15 oder 16, ***dadurch gekennzeichnet, dass*** nach Abtrennung der Faserstoffe die Rejekte in eine kunststoffhaltige und eine metallhaltige Fraktion getrennt werden.

18. Verwendung nach einem der Ansprüche 15 bis 17, ***dadurch gekennzeichnet, dass*** nach der Abtrennung der Faserstoffe und der kunststoffhaltigen Fraktion die Mahlkörper von der metallhaltigen Fraktion getrennt werden.

## Claims

1. A pulper (1) having a shaft (17, 22) on which a spiral coil (7, 21) is arranged, wherein said pulper has a further shaft (24) with a contra-rotating spiral coil (23), or the spiral coil (7) and a contra-rotating spiral coil (8) are arranged on the same shaft (17), wherein in each case the spiral coils (7, 21, 23) are enclosed by a perforated basket (11).

2. The pulper according to claim 1, ***characterized in that*** said pulper has a feed screw (5) in the upper region of the pulper (1).

3. The pulper according to any one of the previous claims, ***characterized in that*** said pulper has a slotted basket (11) radially outside the region between the spiral coil (7) and the contra-rotating spiral coil (8).

4. The pulper according to any one of the previous claims, ***characterized in that*** said pulper has a basket (11) of a pressurised screen.

5. The pulper according to any one of the previous claims, ***characterized in that*** said pulper has a basket (11) which is arranged with different openings around the spiral coils (7, 8).

6. The pulper according to any one of the previous claims, ***characterized in that*** said pulper has a cylindrical basket (11).

7. The pulper according to any one of the previous claims, ***characterized in that*** said pulper has a plurality of units (31 to 35) arranged consecutively, which each have at least one spiral coil (7, 8) and a perforated basket (11).

8. The pulper according to claim 7, ***characterized in that*** the units (31 to 35) are connected to each other by means of an access passage with a feed screw.

9. The pulper according to claim 8, ***characterized in that*** an inlet (52) is arranged in the region of the access passage.

10. The pulper according to any one of the previous claims, ***characterized in that*** consecutively arranged units (31 to 35) have different baskets (11).

11. The pulper according to any one of the previous claims, ***characterized in that*** the consecutively arranged units (31 to 35) have baskets with cylindrical perforated regions, wherein the axial length of the baskets varies.

12. The pulper according to any one of the previous claims, ***characterized in that*** the consecutively arranged units (31 to 35) have baskets with cylindrical perforated regions, wherein the radius of the baskets (11) varies.

13. The pulper according to any one of the previous claims, ***characterized in that*** said pulper has a basket (11) having grinding elements.

14. The pulper according to any one of the previous claims, ***characterized in that*** said pulper has a basket (11) having sand as the grinding elements.

15. Use of a pulper according to any one of claims 1 to 14 for treating composite materials, in which the composite materials are fed into the pulper with grinding elements where rejects and fibrous materials are separated.

16. The use according to claim 15, ***characterized in that*** sand is used as the grinding elements.

17. The use according to claim 15 or 16, ***characterized in that*** after the fibrous materials have been separated out the rejects are separated are separated into a plastic-containing portion and a metal-containing portion.

18. The use according to any one of claims 15 to 17, ***characterized in that*** after the fibrous materials and the plastic-containing portion have been separated out, the grinding elements are separated from the metal-containing portion.

## Revendications

1. Triturateur (1) avec un arbre (17, 22) sur lequel est placée une spirale (7, 21), comprenant un arbre (24) supplémentaire avec une spirale (23) fonctionnant à contresens ou la spirale (7) et une spirale (8) fonctionnant à contresens étant placées sur le même arbre (17), les spirales (7, 21, 23) étant chacune entourée par une crépine (11).

2. Triturateur selon la revendication 1, ***caractérisé en ce qu'**il* comporte une vis d'alimentation (5) dans la région supérieure du triturateur (1).

3. Triturateur selon l'une quelconque des revendications précédentes, *caractérisé en ce qu*'en direction radiale, hors de la région entre la spirale (7) et la spirale (8) fonctionnant à contresens, il comporte un panier fendu (11).

4. Triturateur selon l'une quelconque des revendications précédentes, *caractérisé en ce qu*'il comporte un panier (11) d'une trieuse sous pression.

5. Triturateur selon l'une quelconque des revendications précédentes, *caractérisé en ce qu*'il comporte un panier (11) qui avec des orifices différents est placé autour des spirales (7, 8).

6. Triturateur selon l'une quelconque des revendications précédentes, *caractérisé en ce qu*'il comporte un panier (11) cylindrique.

7. Triturateur selon l'une quelconque des revendications précédentes, *caractérisé en ce qu*'il comporte plusieurs unités (31 à 35) placées successivement, qui comportent chacune au moins une spirale (7, 8) et une crépine (11).

8. Triturateur selon la revendication 7, ***caractérisé en ce que*** les unités (31 à 35) sont reliées entre elles au moyen d'une spirale de transport avec un passage.

9. Triturateur selon la revendication 8, ***caractérisé en ce que*** dans la région du passage est placée une arrivée (52).

10. Triturateur selon l'une quelconque des revendications précédentes, ***caractérisé en ce que*** des unités (31 à 35) placées successivement comportent différents paniers (11).

11. Triturateur selon l'une quelconque des revendications précédentes, ***caractérisé en ce que*** les unités (31 à 35) placées successivement comportent des régions trouées cylindriques, alors que la longueur axiale des paniers varie.

12. Triturateur selon l'une quelconque des revendications précédentes, ***caractérisé en ce que*** les unités (31 à 35) placées successivement comportent des régions trouées cylindriques alors que le rayon des paniers (11) varie.

13. Triturateur selon l'une quelconque des revendications précédentes, *caractérisé en ce qu*'il comporte un panier (11) avec des organes de broyage.

14. Triturateur selon l'une quelconque des revendications précédentes, ***caractérisé en ce qu'**il* comporte un panier (11) avec du sable en tant qu'organes de broyage.

15. Utilisation d'un triturateur selon l'une quelconque des revendications 1 à 14 pour le traitement de matières composites, lors duquel on met la matière composite avec des organes de broyage dans le triturateur, où les rejets et les fibres sont séparés.

16. Utilisation selon la revendication 15, ***caractérisée en ce qu'**on* utilise du sable en tant qu'organes de broyage.

17. Utilisation selon la revendication 15 ou 16, ***caractérisée en ce* qu'**après la séparation des fibres, on sépare les rejets en une fraction contenant des matières plastiques et une fraction contenant des métaux.

18. Utilisation selon l'une quelconque des revendications 15 à 17, *caractérisée **en** ce qu*'après la séparation des fibres et de la fraction contenant des matières plastiques, on sépare les organes de broyage de la fraction métallique.
